# EUROPEAN PATENT APPLICATION

(11) **EP 4 273 785 A1**
(43) Date of publication of application: **08.11.2023**
(21) Application number: 23744037.5
(22) Date of filing: 04.03.2023
(51) Int. Cl.: G06Q 50/10, G06Q 30/06, G06F 21/10, H04L 9/32, G06Q 20/06, G06Q 20/34, G06Q 20/40, G06Q 20/36

(54) **APPARATUS AND METHOD FOR PROVIDING DYNAMIC IDENTIFICATION CODE SALES SERVICE**

(30) Priority: 04.03.2022 KR 20220027972; 27.01.2023 KR 20230010538; 01.02.2023 KR 20230013874; 03.03.2023 KR 20230028321
(71) Applicant: SSenStone Inc., Seoul 02622 (KR)
(72) Inventor: YOO, Chang Hun, Dongjak-gu, Seoul 07064 (KR)
(74) Representative: HGF
(86) International application number: PCT/KR2023/002996
(87) International publication number: WO 2023/167569

(57) **Abstract**

Embodiments of the inventive concept described herein relate to a device and method for providing a sales service that sells a unique identification number changed over time of a specific celebrity. According to an embodiment of the inventive concept, a method for providing a dynamic identification code sales service for each celebrity includes generating, by a service server, an identification code, which is not duplicated, per unit time, and assigning, by the service server, ownership of the identification code requested for a purchase to the user when receiving a purchase request for an identification code at a specific time point from a user. The identification code is not duplicated by the celebrity and is not duplicated per unit time based on a unique code assigned to the celebrity.

## Description

### [TECHNICAL FIELD]

Embodiments of the inventive concept described herein relate to a device and method for providing a sales service that sells a unique identification number changed over time of a specific celebrity.

### [BACKGROUND ART]

Goods refer to products that brand people, companies, characters, and places using design and content. With the success of K-pop, various types of goods for famous artists are being produced and sold.

Nowadays, attempts have been made to sell goods in a form of electronic data. However, due to the nature of electronic data, the electronic data is easily reproduced. Accordingly, it is difficult to give scarcity to the electronic data, and it is difficult to prove the owner, thereby making it difficult to sell the electronic data.

Accordingly, it is necessary to give scarcity to goods in a form of electronic data related to celebrities, and to prove the ownership of a buyer who has purchased goods in the form of electronic data.

### [DETAILED DESCRIPTION OF THE INVENTION]

### [TECHINICAL PROBLEM]

Embodiments of the inventive concept provide a sales service capable of selling a user's unique identification number changed over time.

Problems to be solved by the inventive concept are not limited to the problems mentioned above, and other problems not mentioned will be clearly understood by those skilled in the art from the following description.

### [TECHNICAL SOLUTION]

According to an embodiment, a method for providing a dynamic identification code sales service for each celebrity includes generating, by a service server, an identification code, which is not duplicated, per unit time, and assigning, by the service server, ownership of the identification code requested for a purchase to the user when receiving a purchase request for an identification code at a specific time point from a user. The identification code is not duplicated by the celebrity and is not duplicated per unit time based on a unique code assigned to the celebrity. The celebrity is a sales target that sells an identification code for time, and the user is a user who wants to purchase the identification code for the celebrity.

In an embodiment of the inventive concept, the service server may generate a dynamic identification code for a plurality of celebrities so as not to be duplicated.

In an embodiment of the inventive concept, the identification code may be sold as a specific time point eigenvalue for a specific celebrity.

In an embodiment of the inventive concept, the identification code may be used to manage a buyer as an owner within the service server or may be embedded in a non-fungible token (NFT) so as to be assigned.

In an embodiment of the inventive concept, the assigning of the ownership of the identification code may include receiving, by the service server, an identification code purchase request through a service application installed in a user terminal of the user, and transmitting, by the service server, an ownership assignment result of the identification code according to an identification code purchase through the service application to at least part of user terminals in each of which the service application is installed.

In an embodiment of the inventive concept, the method may further include receiving, by the service server, a second identification code generated by NFC hardware from a user terminal, and providing, by the service server, celebrity information about the second identification code generated by the NFC hardware through verification of the second identification code. The second identification code may be generated per unit time identically to a first identification code for the celebrity generated by the service server.

In an embodiment of the inventive concept, the NFC hardware may receive time data from a user terminal through NFC tagging and may generate a second identification code corresponding to the received time data.

In an embodiment of the inventive concept, the service application may provide a widget, and the widget may change and output an identification code generated at each time point of a celebrity corresponding to NFC hardware owned by a user.

In an embodiment of the inventive concept, the NFC hardware for the same celebrity may generate and provide the same identification code at the same time point.

In an embodiment of the inventive concept, the first identification code sold to the user may be a means of identifying the user's right to purchase limited goods for a celebrity within a metaverse environment.

In an embodiment of the inventive concept, the first identification code sold to the user may be sold as a new NFT product by matching with content corresponding to a time point, at which the first identification code is issued in the NFT marketplace related to the celebrity.

According to an embodiment, a server for providing a dynamic identification code sales service for each celebrity includes a communication unit that transmits and receives data with a user terminal, a code generation unit that generates an identification code, which is not duplicated, per unit time, and a code management unit that assigns ownership of an identification code requested for a purchase to the user when receiving a purchase request for an identification code at a specific time point from a user terminal of a user. The identification code is not duplicated by the celebrity and is not duplicated per unit time based on a unique code assigned to the celebrity. The celebrity is a user that sells an identification code for time, and the user is a user who wants to purchase the identification code for the celebrity.

According to an embodiment, A user terminal for providing a dynamic identification code sales service for each celebrity includes a communication unit that transmits time data to NFC hardware through NFC tagging, receives an identification code generated by NFC hardware, and transmits the received identification code to a service server, and a processor that registers information about a celebrity corresponding to the identification code received from the service server, and, when receiving a purchase request for an identification code at a specific time point for the celebrity from a user, transmits the purchase request for the identification code at the specific time point to the service server such that ownership of the identification code requested for a purchase is assigned to the user. The celebrity is a sales target that sells an identification code for time, and the user is a user who wants to purchase the identification code for the celebrity.

### [ADVANTAGEOUS EFFECTS OF THE INVENTION]

According to the above-mentioned problem solving means of the inventive concept, sales of goods in a form of electronic data about celebrities may be promoted by allowing celebrities to assign scarcity of an identification code for a specific time, and assigning ownership to an identification code, to which the scarcity is assigned.

Moreover, according to an embodiment of the inventive concept, sales of goods in a form of electronic data as well as goods in a form of physical products may be promoted by making it possible to purchase an identification code for a celebrity in connection with physical goods in a form of NFC hardware.

Furthermore, according to an embodiment of the inventive concept, sales of identification codes may be promoted by giving a buyer, who has purchased the identification code, for the right to purchase limited goods within a metaverse environment.

Effects of the inventive concept are not limited to the effects mentioned above, and other effects not mentioned will be clearly understood by those skilled in the art from the following description.

### [DESCRIPTION OF THE DRAWINGS]

FIG. 1 is a diagram schematically showing a sales service system for selling a dynamic identification code, according to an embodiment of the inventive concept.
FIG. 2 is a schematic block diagram of NFC hardware, according to an embodiment of the inventive concept.
FIG. 3 is a schematic block diagram of a user terminal, according to an embodiment of the inventive concept.
FIG. 4 is a schematic block diagram of a server, according to an embodiment of the inventive concept.
FIG. 5 is a flowchart illustrating a method of providing a dynamic identification code sales service, according to an embodiment of the inventive concept.
FIG. 6 is a flowchart illustrating a method of providing a dynamic identification code sales service using NFC hardware, according to an embodiment of the inventive concept.
FIG. 7 is a flowchart illustrating a method of purchasing an identification code through data communication between a user terminal and a service server, according to an embodiment of the inventive concept.
FIG. 8 is a flowchart illustrating a method of providing a sales service that sells an identification code in conjunction with an NFT marketplace, according to an embodiment of the inventive concept.
FIG. 9 is an execution screen of a service application for providing a dynamic identification code sales service, according to an embodiment of the inventive concept.

### [BEST MODE]

The above and other aspects, features and advantages of the inventive concept will become apparent from the following description of the following embodiments given in conjunction with the accompanying drawings. The inventive concept, however, may be embodied in various different forms, and should not be construed as being limited only to the illustrated embodiments. Rather, these embodiments are provided as examples so that the inventive concept will be thorough and complete, and will fully convey the scope of the inventive concept to those skilled in the art. The inventive concept may be defined by the scope of the claims.

The terms used herein are provided to describe embodiments, not intended to limit the inventive concept. In the specification, the singular forms include plural forms unless particularly mentioned. The terms "comprises" and/or "comprising" used herein do not exclude the presence or addition of one or more other components, in addition to the aforementioned components. The same reference numerals denote the same components throughout the specification. As used herein, the term "and/or" includes each of the associated components and all combinations of one or more of the associated components. It will be understood that, although the terms "first", "second", etc., may be used herein to describe various components, these components should not be limited by these terms. These terms are only used to distinguish one component from another component. Thus, a first component that is discussed below could be termed a second component without departing from the technical idea of the inventive concept.

Unless otherwise defined, all terms (including technical and scientific terms) used herein have the same meaning as commonly understood by those skilled in the art to which the inventive concept pertains. The terms, such as those defined in commonly used dictionaries, should not be interpreted in an idealized or overly formal sense unless expressly so defined herein.

Hereinafter, an embodiment of the inventive concept will be described in detail with reference to the accompanying drawings.

Prior to a description, the meaning of terms used in the present specification will be described briefly. However, because the description of terms is used to help the understanding of this specification, it should be noted that if the inventive concept is not explicitly described as a limiting matter, it is not used in the sense of limiting the technical idea of the inventive concept.

In this specification, "celebrity" means a person whose name is widely known in the world. Here, people may include not only real people but also virtual people and characters. That is, in this specification, celebrity may be used to refer to a celebrity, a famous virtual character, or a famous character. Moreover, in this specification, a celebrity is not limited to people, but may be used as a term referring to beings widely known in the world. That is, in this specification, a celebrity may be used as a term that refers to beings widely known in the world, such as famous brands, products launched by famous brands, famous products, and famous animals.

In this specification, a "character" is a component constituting a code and includes all or part of uppercase alphabet characters, lowercase alphabet characters, numerals, and special characters.

In this specification, a "code" refers to a string of characters.

In this specification, a "dynamic identification code" may be a code changed per unit time, and may include a code having specific digits composed of characters. For example, the "dynamic identification code" may be a code that is changed per unit time while being generated so as not to be duplicated between users or devices. Furthermore, for example, the "dynamic identification code" may be used to verify a specific time point at which the dynamic identification code is generated with respect to a user or device, and may be a code (e.g., one-time password (OTP)) itself that is changed every unit time, or may be a code obtained by combining a value unique to a user or device and a unique code (e.g., OTP) changed every unit time. An "identification code" described below is synonymous with the "dynamic identification code". For convenience of description, the "dynamic identification code" is referred to as an "identification code".

In the meantime, for convenience of description in the specification, an identification code generated by a server to be described later is called a "first identification code", and an identification code generated by a device other than the server is called a "second identification code". Here, the first and second identification codes are only used to identify who created the identification code. When the server and the device other than the server generate an identification code for a specific time by using specific seed data, the first and second identification codes may be the same as each other.

In the meantime, when it is not necessary to distinguish the first and second identification codes, each of the first identification code and the second identification code may be described as an "identification code". For example, in the specification below, expressions such as "a server generates an identification code" may be described, where the "identification code" means the first identification code. As another example, in the specification below, expressions such as "NFC hardware generates an identification code" or "a user terminal generates an identification code" may be described, where the "identification code" means the second identification code.

In this specification, the "NFC hardware" refers to all products, which are sold by sellers to users and which include an NFC module capable of transmitting and receiving data and an IC module capable of storing and processing data. For example, the "NFC hardware" may be a product related to a specific celebrity.

In detail, the NFC hardware may be goods related to a specific celebrity. The goods related to a specific celebrity may be a photo or image-printed card, a smartphone case, a doll, a key ring, and the like. However, the NFC hardware is not limited to the above example, and may include all products in which a user terminal and a device capable of transmitting and receiving data are embedded.

In this specification, a "user terminal" is a terminal employed by a user, and is any electronic device including an application processor (AP) capable of driving an application. The user terminal includes a non-portable desktop computer or a portable mobile device (e.g., a smart phone, a tablet PC, a personal digital assistant (PDA), an enterprise digital assistant (EDA), a portable multimedia player (PMP), a personal navigation device (PND), a wearable device, or the like), but is not limited thereto.

In this specification, an "identification code generation function" means a function that generates an identification code. For example, one time password (OTP), etc. are included therein, but are not limited thereto. The identification code generation function may be included in at least one of a server, a user terminal, and NFC hardware.

In this specification, the `detailed code generating function' refers to a function of generating each detailed code constituting the identification code.

In this specification, the "detailed code combination function" refers to a function for generating an identification code by combining or coupling a plurality of detailed codes.

In this specification, a "unique code" refers to a unique code-type value assigned without redundancy for each celebrity to identify a celebrity. In this specification, the "unique code" is given to each celebrity who wants to sell the identification code.

In this specification, a `unit count' is a unit set to a specific time interval and is defined to change as the time interval elapses. For example, 1 count may be used after being set to a specific time interval (e.g., 1 minute).

In this specification, a "non-fungible token (NFT)" means a virtual token that proves the owner of a digital asset by using a blockchain technology.

In this specification, an "NFT product" refers to a digital asset capable of assigning ownership through NFT, and may be data defining images, sounds, and texts.

In this specification, an "NFT marketplace" means an online market that creates NFT products and assigns the ownership of NFT products. Moreover, in this specification, a "marketplace" may refer to a server for providing NFT-related services.

In this specification, goods refer to products that brand people, companies, characters, and places using design and content.

Hereinafter, an embodiment of the inventive concept will be described in detail with reference to the accompanying drawings.

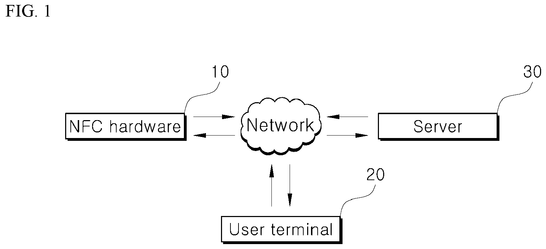

FIG. 1 is a block diagram of a dynamic identification code sales service providing system, according to an embodiment of the inventive concept.

Referring to FIG. 1, a system providing a dynamic identification code sales service (hereinafter referred to as a "system") includes NFC hardware 10, a user terminal 20, and a service server 30. Herein, the system may include fewer or more components than the components illustrated in FIG. 1.

According to an embodiment of the inventive concept, a system is provided to provide a sales service capable of selling an identification code of a specific celebrity (e.g., a famous artist).

The NFC hardware 10 may be a product related to a specific celebrity, and may be goods for a celebrity, for example.

The user terminal 20 may generate an identification code based on data received and obtained from the NFC hardware 10, or the NFC hardware 10 may transmit data for generating the identification code to the NFC hardware 10.

In an embodiment, a program or application in the user terminal 20 generates the identification code based on seed data obtained from the NFC hardware 10. To this end, the program or application may include an OTP function.

In another embodiment, the user terminal 20 transmits time data for generating the identification code to the NFC hardware 10, and the NFC hardware 10 generates the identification code based on the time data through a program or application built into the NFC hardware 10. To this end, the program or application built into the NFC hardware 10 may include an OTP function.

The seed data of the NFC hardware 10 may include a unique code of a specific celebrity (e.g., a famous artist). Here, identification information of a specific celebrity may be generated by a specific celebrity or service provider to sell the dynamic identification code of the specific celebrity.

In an embodiment, when an identification code seller logs into a program or application through the seller's terminal 20 and applies for issuance of a unique code for a specific celebrity to the service server 30, the service server 30 may issue a unique code for the celebrity. The unique code may be a code that does not overlap a unique code of another celebrity.

In another embodiment, when an identification code seller generates an NFT ID for a specific celebrity in a specific NFT marketplace through the seller's terminal 20 and applies for issuance of a unique code based on the NFT ID, the service server 30 may generate the unique code for the corresponding celebrity based on the NFT ID. However, it is not limited thereto, and the celebrity's unique code may be a user's NFT ID itself.

In the meantime, the unique code of the specific celebrity may be stored in the service server 30 and the NFC hardware 10. A seller who sells the NFC hardware 10 may store and sell the unique code of a specific celebrity in the NFC hardware 10. Here, information about a user corresponding to the unique code stored in the specific NFC hardware 10 may not be identified through the appearance of the NFC hardware 10. The user who has purchased the NFC hardware 10 may identify information about the user corresponding to the NFC hardware 10 through a process of registering the NFC hardware 10 in a user terminal. This will be more fully detailed later.

In the meantime, the NFC hardware 10 is not a component necessary for the dynamic identification code sales service providing system according to an embodiment of the inventive concept. The sales service providing system according to an embodiment of the inventive concept may be implemented only with the user terminal 20 and the service server 30. The NFC hardware 10 may be used for adding various elements to a sales service according to an embodiment of the inventive concept.

As mentioned above, the NFC hardware 10 or the user terminal 20 generates an identification code for a specific celebrity through the unique code of the specific celebrity. At this time, the identification code may be generated by an OTP function. In this case, the identification code is generated based on the seed data and time data at a point in time when the generation of the identification code is requested or when the seed data is obtained.

In the meantime, the identification code generated by the NFC hardware 10 may be transmitted to the user terminal 20.

In an embodiment, the identification code is generated by an identification code generation function provided in the NFC hardware 10 or the user terminal 20. In detailed, the identification code may include at least one detailed code or a plurality of detailed codes, which will be described later in detail.

In the meantime, the service server 30 may transmit information related to a specific celebrity corresponding to the identification code received from the user terminal 20 to the user terminal 20 or may assign ownership of the specific identification code in response to a specific identification code purchase request received from the user terminal 20. The service server 30 may be a service server of a service provider providing an identification code sales service, but is not limited thereto. Moreover, referring to FIG. 1, the service server 30 may be shown as being composed of one server, but may be composed of a system in which a plurality of servers are linked to each other.

In the meantime, according to an embodiment of the inventive concept, the service server 30 may further perform a process of verifying whether the received identification code is normally generated.

As shown in FIG. 1, the NFC hardware 10, the user terminal 20, and the service server 30 may transmit and receive various types of data, signals, or information through a communication network.

Here, various types of communication networks may be used. For example, wireless communication methods such as wireless LAN (WLAN), Wi-Fi, Wibro, Wimax, High Speed Downlink Packet Access (HSDPA), and the like or wired communication methods such as Ethernet, xDSL (ADSL or VDSL), Hybrid Fiber Coax (HFC), Fiber to The Curb (FTTC), Fiber to the Home (FTTH), and the like may be used in a communication network.

In the meantime, the communication network is not limited to the communication method described above, and may include all types of communication methods widely known or to be developed in the future in addition to the above communication methods.

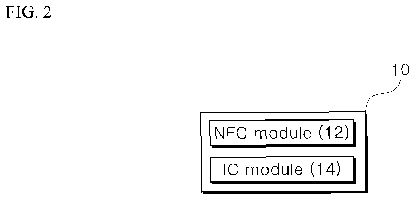

Referring to FIG. 2, the NFC hardware 10 may include a narrow frequency communication (NFC) module 12 and an IC module 14. Herein, the NFC hardware 10 may include fewer or more components than the components illustrated in FIG. 2.

The NFC module 12 (i.e., an NFC chip) may be a communication module and may perform NFC-based communication when tagging with the user terminal 20.

The IC module 14 (i.e., IC chip) may store data for generating an identification code through an applet.

The IC module 14 may be mounted in the PCB board to exchange data with the user terminal 20 through the NFC module 12. The IC module 14 includes an arbitrary form such as a component including an integrated circuit (IC) and a system on chip (SoC). For example, the IC chip may be of an ISO 14443 NXP Mifare Classic type according to an embodiment of the inventive concept, but is not limited thereto.

Besides, although not shown in drawings, the NFC hardware 10 may include a memory (not shown) storing data. Here, the data stored in the NFC hardware 10 may include all pieces of data necessary to generate an identification code.

The applet stores a function of generating a unique code and an identification code of a specific celebrity in the NFC hardware 10.

When being tagged to the user terminal 20, the IC module 14 may transmit data necessary for generating the identification code to the user terminal 20 through the NFC module 12 or may receive data necessary for generating the identification code from the user terminal 20. At this time, data transmitted between the NFC hardware 10 and the user terminal 20 may be a unique code of a specific celebrity or time information, but is not limited thereto. The identification code may be generated based on the unique code (seed data) of the specific celebrity and time data corresponding to a point in time (or a point in time when the generation of an identification code is requested) when the seed data is received. This will be more fully described later.

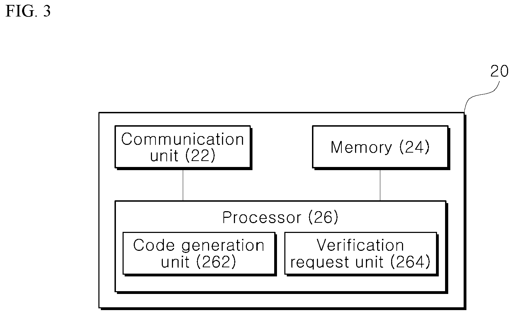

Referring to FIG. 3, the user terminal 20 may include a communication unit 22, a memory 24, and a processor 26. Herein, the user terminal 20 may include fewer or more components than the components illustrated in FIG. 3.

When the NFC hardware 10 is tagged to the user terminal 20, the communication unit 22 may transmit a command for requesting the return of a unique value and a time information value to the NFC hardware 10 through a communication network, and may receive seed data from the NFC hardware 10 or an identification number generated by the NFC hardware 10. Besides, various pieces of data may be transmitted and received during tagging between the communication unit 22 and the NFC hardware 10.

The memory 24 may store data for supporting various functions of the user terminal 20. The memory 24 may store a plurality of application programs (or applications) running in the user terminal 20, at least one process for an operation of the user terminal 20, pieces of data, and instructions. At least part of the application programs may be present for basic functions of the user terminal 20.

In addition to an operation associated with the application program, the processor 26 may generally control overall operations of the user terminal 20. The processor 26 may provide or process appropriate information or functions to the NFC hardware 10 or the service server 30, by processing a signal, data, information, or the like, which is input or output through the above-described components, or driving the application program stored in the memory 24.

Besides, the processor 26 may control at least part of the components described with reference to FIG. 3 to operate the application program stored in the memory 24. Furthermore, the processor 26 may combine and operate at least two or more of the components included in the user terminal 20 to operate the application program.

Referring to FIG. 3, the processor 26 may include a code generation unit 262 and a verification request unit 264. Herein, the processor 26 may include fewer or more components than the components illustrated in FIG. 3.

The code generation unit 262 may generate an identification code by using time data and the seed data received from the NFC hardware 10. To this end, the code generation unit 262 may include an identification code generation function.

The verification request unit 264 may transmit the identification code to the service server 30 through the communication unit 22 and may request the service server 30 to verify the identification code.

In the meantime, the processor 26 may transmit a purchase request for a specific identification code to the service server 30 through the communication unit 22.

Although not shown in FIG. 3, in addition to the code generation unit 262 and the verification request unit 264, the processor 26 may further include components that perform various calculation operations and determination operations.

Although not illustrated in drawings, the user terminal 20 may further include a display unit for displaying screen information.

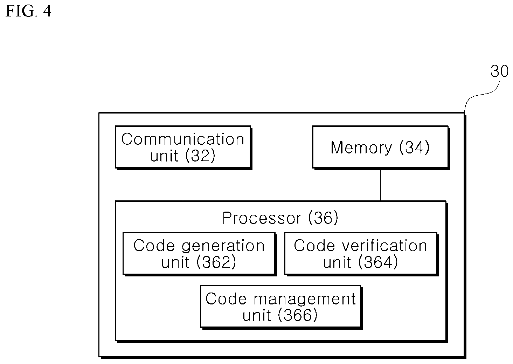

Referring to FIG. 4, the service server 30 may include a communication unit 32, a memory 34, and a processor 36. Herein, the service server 30 may include fewer or more components than the components illustrated in FIG. 4.

The communication unit 32 may exchange data with the user terminal 20. For example, the communication unit 32 may receive an identification code from the user terminal 20 or may receive information for purchasing the identification code.

The memory 34 may store data supporting a sales service according to an embodiment of the inventive concept.

In addition to an operation associated with the application program, the processor 36 may generally control overall operations of the service server 30. The processor 36 may provide or process appropriate information or functions to the user terminal 20, by processing a signal, data, information, or the like, which is input or output through the above-described components, or driving the application program stored in the memory 34.

Besides, the processor 36 may control at least part of the components described with reference to FIG. 4 to operate the application program stored in the memory 34. Furthermore, the processor 36 may combine and operate at least two or more of the components included in the service server 30 to operate the application program.

Referring to FIG. 4, the processor 36 may include a code generation unit 362, a code verification unit 364, and a code management unit 366. Herein, the processor 36 may include fewer or more components than the components illustrated in FIG. 4.

The code generation unit 362 may generate an identification code by using time data and seed data stored in the memory 34. To this end, the code generation unit 362 may include an identification code generation function.

The code verification unit 364 may verify the identification code received from the user terminal 20. The code verification unit 364 may determine whether the received identification code is a normally generated identification code, or may derive a unique code of a specific celebrity corresponding to the identification code by utilizing the identification code.

The code management unit 366 may manage the ownership of an identification code corresponding to a specific point in time of a specific celebrity. In detail, the code management unit 366 may assign the ownership for the specific identification code in response to a purchase request for a specific identification code. The ownership may be assigned within the service server 30 or through a specific NFT marketplace. This will be described later.

Although not shown in FIG. 4, in addition to the code generation unit 362, the code verification unit 364, and the code management unit 366, the processor 36 may further include components that perform various calculation operations and determination operations.

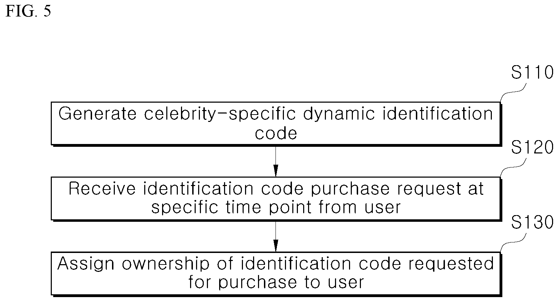

Hereinafter, a dynamic identification code sales service providing method according to an embodiment of the inventive concept will be described with reference to FIG. 5.

FIG. 5 is a flowchart illustrating a method of providing a dynamic identification code sales service, according to an embodiment of the inventive concept.

Referring to FIG. 5, the method generates a celebrity-specific dynamic identification code for a celebrity (S 110).

The celebrity may be a sales target that sells an identification code for time, and a unique code for each celebrity may be stored in the service server 30.

The identification code means an identification code that does not overlap other codes generated by the service server 30 per unit time (e.g., 1 minute). The service server 30 may generate a first identification code for a celebrity per unit time based on a unique code assigned to the celebrity.

The service server 30 generates first identification codes for a plurality of celebrities such that the first identification codes do not overlap each other. Accordingly, the first identification code may be a code that does not have redundancy for each celebrity and does not have redundancy per unit time. That is, the identification code may be a unique code, which represents a specific time point of a celebrity and which does not overlap other codes.

In the meantime, the identification code may be marketed as an eigenvalue at a specific time point for a specific celebrity. For example, the celebrity may sell the identification code generated during the celebrity's significant time. As a specific example, when the celebrity is a famous artist, the celebrity may sell an identification code corresponding to a meaningful time period related to the famous artist.

Next, the method receives an identification code purchase request at a specific time point from a user (S120).

The user may be a user who wants to purchase an identification code for the celebrity.

The user may purchase the identification code for the specific celebrity by subscribing to a marketplace for a dynamic identification code sales service according to an embodiment of the inventive concept.

A program or service application for purchasing a dynamic identification code may be installed in the user's user terminal. The user may request a purchase for the identification code of the specific celebrity by executing the program or service application (hereinafter referred to as a "wallet app").

In an embodiment, the user may register a specific celebrity, for which he/she wants to purchase an identification code, in the user terminal. In this case, information related to the registered specific celebrity may be displayed on the execution screen of the wallet app.

The user may enter information related to the identification code, which he/she wants to purchase, on the execution screen of the wallet app and may request a purchase for the identification code.

In an embodiment of the inventive concept, the user may enter time information about a specific time point corresponding to the identification code to be purchased through the user terminal, and may request the purchase of an identification code. When the user terminal receives time information about a specific time point, the user terminal may generate a second identification code corresponding to the specific time point based on the received time information and the unique code of the specific celebrity stored in the user terminal. Afterward, the user terminal may transmit the second identification code and a purchase request for the second identification code to the service server 30. Moreover, in an embodiment of the inventive concept, a purchase menu for purchasing an identification code corresponding to a current time point may be displayed on the execution screen of the wallet app. The user terminal generates a second identification code per unit time based on current time information and the unique code of the specific celebrity registered in the user terminal. When the user selects the purchase menu, the user terminal may transmit the second identification code, which is generated at the current time point, and a sales request for an identification code corresponding to the identification code generated at the current time point to the service server 30.

Furthermore, in an embodiment of the inventive concept, only when a specific condition is satisfied, the user may register a specific celebrity in the user terminal. In particular, respective NFC hardware described above may store a unique code for one of a plurality of celebrities. Only when registering the NFC hardware, in which the unique code of the specific celebrity is stored, in the user terminal, the user may purchase the identification code of the specific celebrity. This will be more fully detailed later.

Finally, the method assigns the identification code requested for a purchase to the user (S130).

The identification code to be requested for a purchase may be an identification code corresponding to a current time point or an identification code corresponding to a specific time point in the past.

A buyer may be managed as an owner in a separate central server by using the identification code, or the identification code may be embedded in NFT to assign the owner of the identification code.

In detail, the above-described service server 30 or separate central server may manage the ownership of an identification code corresponding to a celebrity. The code management unit 366 included in the service server 30 may match and store owner information to a specific identification code. Here, the owner information may include the ID or personal information of the user who has requested the purchase of the specific identification code. The ownership of the identification code may be managed through the service server.

Meanwhile, the owner of the specific identification code may be assigned to be embedded in NFT. In detail, the code management unit 366 included in the service server 30 may request the specific NFT marketplace to create a new NFT corresponding to the specific identification code, and may make a request for setting the owner of the new NFT as a user who requested a purchase for the specific identification code. Accordingly, the owner of the specific identification code may be assigned to be embedded in NFT.

As mentioned above, an embodiment of the inventive concept provides a sales service that generates an identification code corresponding to a first user, which does not overlap other codes, per unit time and allows the user to purchase an identification code corresponding to a specific time point. The aforementioned sales service may be provided in various forms. Hereinafter, various embodiments of a method for providing an identification code sales service according to an embodiment of the inventive concept will be described.

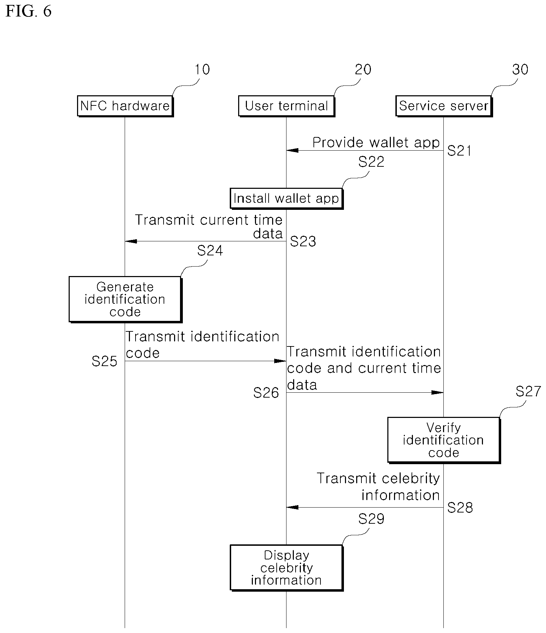

FIG. 6 is a flowchart illustrating a method of providing a dynamic identification code sales service using NFC hardware, according to an embodiment of the inventive concept.

In an embodiment of the inventive concept, it is possible to provide a dynamic identification code sales service using NFC hardware. In detail, only when the NFC hardware 10 corresponding to a specific celebrity is registered in a service application (a wallet app), the purchasing right for an identification code of a specific celebrity may be assigned.

Referring to FIG. 6, the service server 30 provides information related to the wallet app to the user terminal 20 of a user (S21). Afterward, the wallet app is installed in the user terminal 20 based on the information related to the wallet app (S22). After the wallet app is installed in the user terminal 20, the NFC hardware 10 may be registered in the wallet app.

In detail, after the user purchases the NFC hardware 10, when the user tags the NFC hardware 10 to the user terminal 20, the user terminal 20 transmits current time data to the NFC module 12 embedded in the tagged NFC hardware 10.

The NFC module 12 embedded in the NFC hardware delivers the received current time data to the IC module 14 embedded in the NFC hardware 10. The IC module 14 generates a second identification code by utilizing the current time data and a unique code of a specific celebrity pre-stored in the NFC hardware 10 (S24). Afterward, the IC module 14 transmits the second identification code generated through the NFC module 12 to the user terminal 20 (S25).

The user terminal 20 transmits the second identification code received from the NFC hardware 10 and the current time data used to generate the second identification code to the service server 30.

The service server 30 determines whether the second identification code is a normally generated code, based on the received second identification code and the current time data used to generate the second identification code, and specifies a celebrity corresponding to the second identification code (S27). The service server 30 transmits information of the specified celebrity to the user terminal 20 (S28). Accordingly, the celebrity information corresponding to the NFC hardware 10 is displayed on the user terminal 20 (S29).

Here, the NFC hardware 10 and the service server 30 may include the same identification code generation function. When the NFC hardware 10 and the service server 30 generate identification codes at the same time point by using the same seed data, both identification codes are the same as each other. That is, the second identification code is generated at every unit time identically to the first identification code for the celebrity generated by the service server 30. The service server 30 may determine whether the second identification code is a normally generated identification code, by determining whether the second identification code for the celebrity generated by the NFC hardware 10 is the same as the identification code (the first identification code) for the celebrity generated by the service server 30.

As mentioned above, only when the user registers the purchased NFC hardware 10 in the wallet app, the user may identify the celebrity information corresponding to the NFC hardware 10, and the user may purchase the celebrity identification code corresponding to the NFC hardware 10.

In an embodiment, the pieces of NFC hardware 10 may be registered in the wallet app.

In an embodiment, the pieces of NFC hardware for the same celebrity may be sold. In this case, the NFC hardware for the same celebrity may store the unique code of the same celebrity. Accordingly, each of the pieces of NFC hardware for the same celebrity may generate and provide the same identification code at a specific time point.

In an embodiment, the celebrity may be a specific celebrity, and the NFC hardware may be goods for the celebrity. Only when the user purchases goods for the specific celebrity and registers the goods in the wallet app, the user may identify celebrity information corresponding to the purchased goods.

In an embodiment, when a plurality of celebrities are a group of artists who constitute a team, the NFC hardware may be sold as goods for each member of the artist group. Only when the user purchases the NFC hardware and then registers the NFC hardware in the wallet app, the user may determine a group member of the artist group corresponding to the purchased goods.

As mentioned above, the inventive concept makes it possible to obtain a purchase right for an identification code of a specific celebrity through the NFC hardware. When the specific celebrity is a famous person, sales of goods related to the celebrity may be promoted through the above method.

In the meantime, after obtaining the right to purchase an identification code of a specific celebrity, the identification code may be purchased through data transmission and reception between the user terminal 20 and the service server 30.

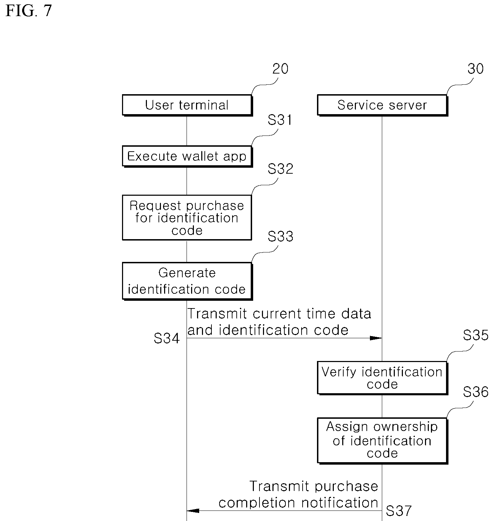

FIG. 7 is a flowchart illustrating a method of purchasing an identification code through data communication between a user terminal and a service server, according to an embodiment of the inventive concept.

Referring to FIG. 7, when NFC hardware is registered in a wallet app and then the wallet app is executed (S31), celebrity information corresponding to the registered NFC hardware may be displayed. A user may designate a specific time of a celebrity to be purchased on the execution screen of the wallet app through the user terminal 20, and may request a purchase for the specific time (S32).

When the user terminal 20 receives the specific time and a purchase request for the specific time from the user, the user terminal 20 generates the celebrity's identification code corresponding to the specific time (S33), and transmits data regarding the specific time and the generated identification code to the service server 30 (S34).

When the service server 30 receives the data regarding the specific time and identification code from the user terminal 20, the code verification unit 364 included in the service server 30 verifies whether the identification code is a normally generated code (S35). When it is determined that the identification code is the normally generated identification code, the code management unit 366 determines whether the owner of the identification code is present.

When the owner of the identification code requested for purchase is not present, the code management unit 366 assigns the ownership of the identification code requested for a purchase to the user (S36). Afterward, the service server 30 transmits a purchase completion notification to the user terminal 20 (S37).

In an embodiment of the inventive concept, the purchase completion notification may be transmitted to all or part of users who have installed the wallet app as well as the user who has requested the purchase of the identification code. Accordingly, whenever a specific identification code is sold, the purchase completion notification for the specific identification code may be output to the user terminal in which the wallet app is installed.

Besides, in an embodiment of the inventive concept, the purchase completion notification may be transmitted to a plurality of users who have the right to purchase the identification code for the specific celebrity corresponding to the purchased identification code. Accordingly, the purchase completion notification for the specific identification code may be output to the user terminal of the user who has registered the specific celebrity in the wallet app.

In the meantime, in an embodiment of the inventive concept, the identification code issued at a specific time point through the NFT marketplace may be matched with the corresponding content and then may be sold as a new NFT product.

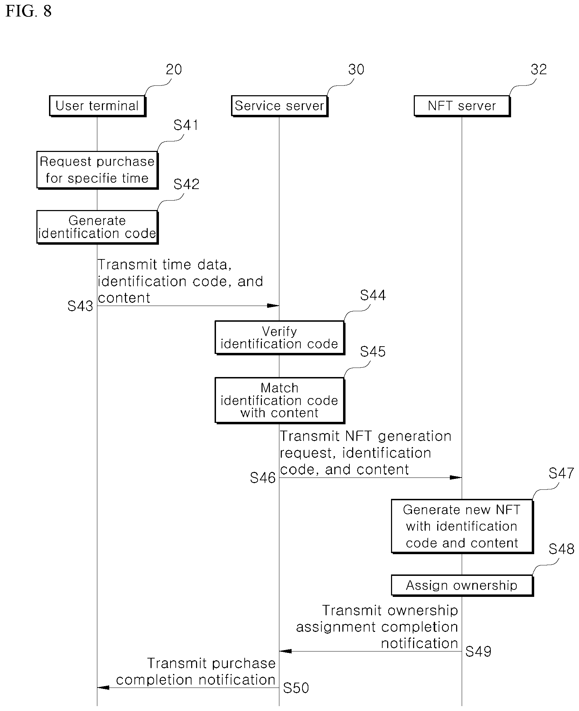

FIG. 8 is a flowchart illustrating a method of providing a sales service that sells an identification code in conjunction with an NFT marketplace, according to an embodiment of the inventive concept.

When the user terminal 20 receives a specific time purchase request (S41) from a user, the user terminal 20 generates an identification code corresponding to the specific time (S42). However, it is not limited thereto. The user terminal 20 may generate an identification code for a specific celebrity in real time and may display the identification code on the execution screen of a wallet app. The user may request a purchase for the identification code displayed on the wallet app. In this case, the user terminal 20 does not need to generate an identification code for each purchase request.

Next, the user terminal 20 transmits the identification code and time data used to generate the identification code to the service server 30 (S43). At this time, the user terminal 20 may additionally transmit content at the request of the user.

The service server 30 may verify the identification code received from the user terminal 20 (S44). When the received identification code is a normally generated identification code, the service server 30 may transmit an NFT generation request and the identification code to a NFT server 32. The NFT server 32 may generate a new NFT with an identification code based on an NFT generation request received from the service server 30, and may assign the ownership of the new NFT to the user who has requested the purchase (S48).

Afterward, the NFT server 32 transmits ownership assignment completion notification to the service server 30, and the service server 30 transmits a purchase completion notification to the user terminal 20. As mentioned above, the purchase completion notification may be transmitted to all or part of user terminals that have installed the wallet app.

In the meantime, when content is transmitted to the service server 30 together with an identification code, the service server 30 matches the content to the identification code (S45), and transmits the identification code matched with the content to the NFT server 32. The NFT server 32 generates a new NFT with an identification code and content (S47), and assigns the ownership of the identification code (S48).

Here, the content may be content related to a celebrity corresponding to an identification code that the user wants to purchase. For example, the content may be a photo taken by the user with the celebrity. The identification code to be purchased may be an identification code corresponding to a time point at which the picture has been taken.

As mentioned above, the first identification code sold to the user may be matched with the content corresponding to the time point at which the first identification code has been issued in the NFT marketplace related to the celebrity, and then may be sold as a new NFT product.

In the meantime, in a metaverse environment, the first identification code sold to the user may be used as a means of identifying the user's right to purchase limited goods for a celebrity.

Hereinafter, the execution screen of the aforementioned service application (wallet app) will be described.

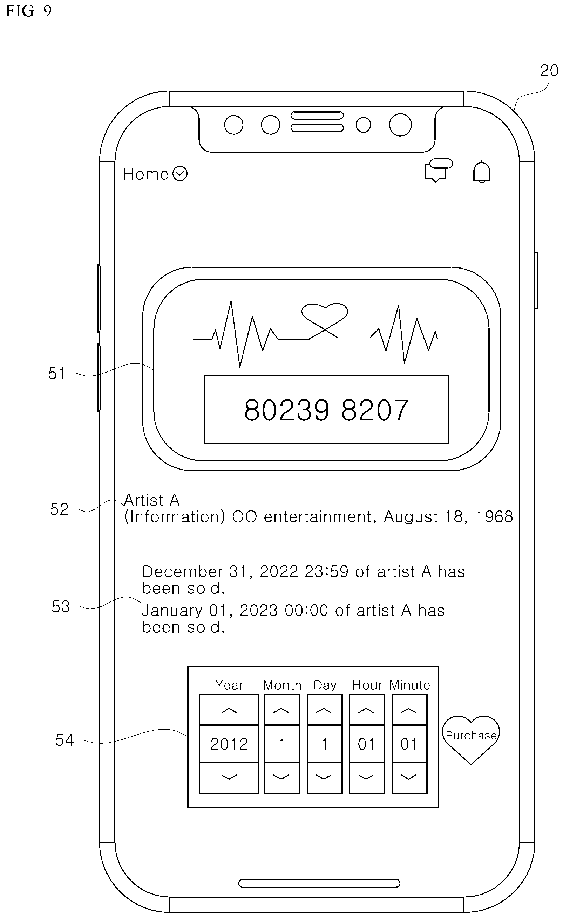

FIG. 9 is an execution screen of a service application for providing a dynamic identification code sales service, according to an embodiment of the inventive concept.

Referring to FIG. 9, an identification code 51 generated at every time point of a celebrity corresponding to NFC hardware registered in a service application may be displayed on the execution screen of the service application. A user may select an identification code and may make a purchase request for the selected identification code.

In an embodiment of the inventive concept, information 52 of the celebrity registered through NFC hardware may be displayed on the execution screen of the service application.

Moreover, in an embodiment of the inventive concept, identification code sales information 53 of the celebrity registered through the NFC hardware may be displayed on the execution screen of the service application.

Also, in an embodiment of the inventive concept, a menu 54 for entering past time information may be displayed on the execution screen of the service application such that a user requests the purchase of an identification code for a celebrity's past time point. The user may request the purchase of an identification number by entering a time point corresponding to the identification number to be purchased into the menu.

Furthermore, the service application may provide a widget. The widget may change and output an identification code generated at each time point of a celebrity corresponding to the NFC hardware of the user. In other words, even when a wallet app is not executed, the identification code generated at each time point of a celebrity registered in one area of the user terminal may be displayed on the user's user terminal.

Hereinafter, a method in which each of the NFC hardware 10, the user terminal 20, and the service server 30 generate an identification code will be described in detail.

A code generation unit included in each of the NFC hardware 10, the user terminal 20, and the service server 30 may generate one or a plurality of detailed codes. The detailed code means some codes constituting an identification code. The identification code may consist of only detailed codes, or may be formed in a form of a final identification code (OTAC) by combining one or a plurality of detailed codes with a first virtual code generated by an OTP function.

The code generation unit includes an identification code generation function for generating an identification code. The identification code generation function includes a detailed code generation function that generates one or more detailed codes, and a detailed code combination function (i.e., a rule for combining a plurality of detailed codes) that generates a virtual code by combining the detailed codes.

That is, when the identification code includes a plurality of detailed codes. The identification code generation function generates a plurality of detailed codes by using a plurality of detailed code generation functions, and generates an identification code by combining the plurality of detailed codes into a preset combination through the detailed code combination function.

The plurality of detailed codes have a correlation used such that the service server 30 searches for a storage space of information capable of identifying a celebrity. In other words, the service server 30 includes a search algorithm (a storage space search algorithm). The search algorithm extracts a plurality of detailed codes included in the identification code, and searches for the storage space of identification information assigned to a celebrity based on the correlation between the plurality of detailed codes. As an embodiment of the correlation between the plurality of detailed codes, the search algorithm included in the service server 30 may perform a calculation based on the correlation between the plurality of detailed codes from waypoints corresponding to one or more detailed codes among the plurality of detailed codes, and thus may search for a storage location of the celebrity. At this time, there are one or more waypoints, and there is no limit to the number and order.

Furthermore, as an embodiment of a plurality of detailed codes, the plurality of detailed codes may include a first code and a second code. The code generation unit generates the first code and the second code by including a first function and a second function as detailed code generation functions. The first code and the second code have a correlation for searching for a storage location of information of a celebrity within the service server 30. However, the code generation module may include the first function for generating the first code and the second function for generating the second code as detailed code generation functions to improve security, and may not include data for the correlation between the first code and the second code.

Moreover, as an embodiment of a plurality of detailed codes, the plurality of detailed codes may include a first code and a second code. The code generation unit generates the first code and the second code by including a first function and a second function as detailed code generation functions.

In an embodiment of the inventive concept, the first code may be generated based on a first count. The second code may be generated based on a second count. In this case, the first count may include the number of unit counts that have elapsed from a first time point at which the identification code generation function is driven in the service server 30 to a time point at which the identification code is generated. The second count may include the number of unit counts that have elapsed from a time point at which the celebrity's unique code is registered in the service server 30.

In other words, the first function that generates the first code is a function that provides a specific code value corresponding to the first count, and the second function that generates the second code is a function that provides a specific code value corresponding to the second count.

In an embodiment, the above-described identification code may be used by combining OTAC, which is an identification code, and a time value (e.g., UTC) at a time point at which the corresponding OTAC is generated. For example, the identification code may be used by combining a time value "Time: 230227114752" at a time point at which an identification code is generated, and a code value "Code: w0uQ46K584s3" generated by an identification code generation function.

In an embodiment, according to an embodiment of the inventive concept, a time value that increases over time may be displayed together with an identification code to have the feeling of buying the time of a specific celebrity.

In an embodiment, even when the identification code is converted into NFT, both the code value generated by the identification code generation function and the time value used to generate the identification code may be included.

As described above, when the time value is used, the code value itself may be generated again, but the NFT itself may not be duplicated because the time value is different.

FIGS. 5 to 8 illustrate that operations are performed sequentially. However, this is merely illustrative of the technical idea of the inventive concept. Those skilled in the art to which an embodiment of the inventive concept belongs may apply various modifications and variations by changing and performing the order illustrated in FIGS. 5 to 8 or performing operations in parallel without departing from the essential characteristics of an embodiment of the inventive concept. The embodiment in FIGS. 5 to 8 is not limited to a time-series order.

In the meantime, in the above description, operations in FIGS. 5 to 8 may be further divided into additional operations or may be combined into fewer operations, according to an embodiment of the inventive concept. In addition, some operations may be omitted as necessary, and the order between operations may be changed.

Meanwhile, the disclosed embodiments may be implemented in a form of a recording medium storing instructions executable by a computer. The instructions may be stored in a form of program codes, and, when executed by a processor, generate a program module to perform operations of the disclosed embodiments. The recording medium may be implemented as a computer-readable recording medium.

The computer-readable recording medium may include all kinds of recording media in which instructions capable of being decoded by a computer are stored. For example, there may be read only memory (ROM), random access memory (RAM), magnetic tape, magnetic disk, flash memory, optical data storage device, and the like.

Disclosed embodiments are described above with reference to the accompanying drawings. One ordinary skilled in the art to which the inventive concept belongs will understand that the inventive concept may be practiced in forms other than the disclosed embodiments without altering the technical ideas or essential features of the inventive concept. The disclosed embodiments are examples and should not be construed as limited thereto.

## Claims

1. A method for providing a dynamic identification code sales service for each celebrity, the method comprising:
generating, by a service server, an identification code, which is not duplicated, per unit time, wherein the identification code is not duplicated by the celebrity and is not duplicated per unit time based on a unique code assigned to the celebrity; and
when receiving a purchase request for an identification code at a specific time point from a user, assigning, by the service server, ownership of the identification code requested for a purchase to the user,
wherein the celebrity is a sales target that sells an identification code for time, and
wherein the user is a user who wants to purchase the identification code for the celebrity.

2. The method of claim 1, wherein the service server generates a dynamic identification code for a plurality of celebrities so as not to be duplicated.

3. The method of claim 1, wherein the identification code is sold as a specific time point eigenvalue for a specific celebrity.

4. The method of claim 1, wherein the identification code is used to manage a buyer as an owner within the service server or is embedded in a non-fungible token (NFT) so as to be assigned.

5. The method of claim 1, wherein the assigning of the ownership of the identification code includes:
receiving, by the service server, an identification code purchase request through a service application installed in a user terminal of the user; and
transmitting, by the service server, an ownership assignment result of the identification code according to an identification code purchase through the service application to at least part of user terminals in each of which the service application is installed.

6. The method of claim 5, further comprising:
receiving, by the service server, a second identification code generated by NFC hardware from a user terminal, wherein the second identification code is generated per unit time identically to a first identification code for the celebrity generated by the service server; and
providing, by the service server, celebrity information about the second identification code generated by the NFC hardware through verification of the second identification code.

7. The method of claim 6, wherein the NFC hardware receives time data from a user terminal through NFC tagging and generates a second identification code corresponding to the received time data.

8. The method of claim 6, wherein the service application provides a widget, and
wherein the widget changes and outputs an identification code generated at each time point of a celebrity corresponding to NFC hardware owned by a user.

9. The method of claim 6, wherein the NFC hardware for the same celebrity generates and provides the same identification code at the same time point.

10. The method of claim 1, wherein the first identification code sold to the user is a means of identifying the user's right to purchase limited goods for a celebrity within a metaverse environment.

11. The method of claim 1, wherein the first identification code sold to the user is sold as a new NFT product by matching with content corresponding to a time point, at which the first identification code is issued in the NFT marketplace related to the celebrity.

12. A program coupled with a computer and stored in a computer-readable recording medium to perform the method of claim 1.

13. A server for providing a dynamic identification code sales service for each celebrity, the server comprising:
a communication unit configured to transmit and receive data with a user terminal;
a code generation unit configured to generate an identification code, which is not duplicated, per unit time, wherein the identification code is not duplicated by the celebrity and is not duplicated per unit time based on a unique code assigned to the celebrity; and
a code management unit configured to assign ownership of an identification code requested for a purchase to the user when receiving a purchase request for an identification code at a specific time point from a user terminal of a user,
wherein the celebrity is a user that sells an identification code for time, and
wherein the user is a user who wants to purchase the identification code for the celebrity.

14. A user terminal for providing a dynamic identification code sales service for each celebrity, the user terminal comprising:
a communication unit configured to transmit time data to NFC hardware through NFC tagging, to receive an identification code generated by the NFC hardware, and to transmit the received identification code to a service server; and
a processor configured to register information about a celebrity corresponding to the identification code received from the service server, and, when receiving a purchase request for an identification code at a specific time point for the celebrity from a user, to transmit the purchase request for the identification code at the specific time point to the service server such that ownership of the identification code requested for a purchase is assigned to the user,
wherein the celebrity is a sales target that sells an identification code for time, and
wherein the user is a user who wants to purchase the identification code for the celebrity.
